# EUROPÄISCHE PATENTSCHRIFT

(11) **EP 2 315 681 B1**
(45) Veröffentlichungstag und Bekanntmachung des Hinweises auf die Patenterteilung: **11.07.2012**
(21) Anmeldenummer: 09782304.1
(22) Anmeldetag: 28.08.2009
(51) Int. Cl.: B61D 1/04, B61D 33/00, B60N 2/01, B64D 11/06, B60N 2/24

(54) **SITZANORDNUNG**
SEAT ARRANGEMENT
AGENCEMENT DE SIÈGES

(30) Priorität: 28.08.2008 DE 102008044712
(43) Veröffentlichungstag der Anmeldung: 04.05.2011
(73) Patentinhaber: Bombardier Transportation GmbH, 10785 Berlin (DE)
(72) Erfinder: KIRCHHOF, Robert, 51503 Rösrath (DE); GOOSSENS, Stefan, 10437 Berlin (DE)
(74) Vertreter: Cohausz & Florack
(86) Internationale Anmeldenummer: PCT/EP2009/061102
(87) Internationale Veröffentlichungsnummer: WO 2010/023259

(56) Entgegenhaltungen:
- WO-A1-2009/013445
- WO-A2-2009/067028
- DE-A1-102008 009 810
- DE-C- 486 237
- FR-A1- 2 306 659
- US-A- 4 936 620
- US-A1- 2008 042 010
- US-B1- 7 178 871

## Beschreibung

Die vorliegende Erfindung betrifft eine Sitzanordnung für ein Fahrzeug zur Personenbeförderung, insbesondere ein Schienenfahrzeug, mit mindestens zwei Passagiersitzen, die horizontal nebeneinander angeordnet sind und jeweils eine Sitzfläche, eine Rückenlehne und zwei Armlehnen aufweisen. Ferner betrifft die Erfindung ein entsprechendes Schienenfahrzeug mit einem Wagenkasten und mit mehreren Sitzanordnungen mit mindestens zwei Passagiersitzen, die horizontal nebeneinander angeordnet sind und jeweils eine Sitzfläche, eine Rückenlehne und zwei Armlehnen aufweisen. Eine Sitzanordnung mit den im Oberbegriff von Anspruch 1 definierten Merkmalen ist aus der US-A-4 936 620 bekannt.

Eine Sitzanordnung mit zwei nebeneinander angeordneten Passagiersitzen wird im Folgenden auch als Doppelsitz und eine entsprechende Sitzanordnung mit drei Passagiersitzen als Dreifachsitz bezeichnet.

Sitzanordnungen mit solchen Doppel- oder Dreifachsitzen werden gemäß Stand der Technik sowohl als Reihenbestuhlung, bei der eine Vielzahl von Sitzanordnungen in gleicher Ausrichtung in einer oder zwei Reihen entlang des Wagenkastens angeordnet ist, als auch als vis-ä-vis-Bestuhlung, bei der zwei Sitzanordnungen jeweils mit den Sitzflächen aufeinander zuweisend zu Sitzgruppen mit vier oder sechs Sitzen und gegebenenfalls einem dazwischen angeordneten Tisch gruppiert sind, vorgesehen. Dabei verfügt jeder Passagiersitz über zwei separate Armlehnen, was typischerweise bei Sitzen der 1. Klasse vorgesehen ist, oder zwei benachbarte Passagiersitze haben eine Armlehne gemeinsam, teilen sich also die Mittelarmlehne, was typischerweise bei Sitzen der 2. Klasse vorkommt.

Es ist außerdem bekannt, Einzel-, Doppel- oder Dreifachsitze nebeneinander im rechten Winkel oder parallel zur Seitenwand des Wagenkastens anzuordnen. In der 2. Klasse eines Schienenfahrzeugs ist in der Regel entlang jeder Seite des Wagenkastens eine Reihe aus Doppelsitzen vorgesehen (2+2 Bestuhlung), wohingegen in der 1. Klasse aufgrund der breiteren Sitze und der Limitierung der Breite des Wagenkastens entlang einer Wagenkastenseite eine Reihe von Doppelsitzen und entlang der anderen Seite des Wagenkastens lediglich eine Reihe von Einzelsitzen vorgesehen ist (2+1 Bestuhlung). Der bisherige Stand der Technik erlaubt bei Wagenkästen der üblichen Begrenzungsprofile, die gesetzlich vorgegeben sind, mit einer Mindestlänge von 23 m und der sich daraus zwangsläufig ergebenden Wagenkastenbreite in der Regel keine 2+2 Bestuhlung in der 1. Klasse aufgrund einer zu geringen Breite im Wagenkasteninnern. Grundsätzlich gilt dies für alle Begrenzungsprofile und Wagenkastenlängen, wenn die resultierende Wagenkastenbreite im Innenraum eine 2+2 Bestuhlung - unabhängig davon, um welche Klasse es sich handelt - nicht zulässt. Die Anordnung der Einzelsitze direkt nebeneinander und deren Kombination zu Doppel- oder Dreifachsitzen führt dann zu Breiten der Passagiersitze, die bei Aufrechterhaltung einer gegebenen Gangbreite nicht mehr im Wagen in Querrichtung angeordnet werden können.

Es ist daher die Aufgabe der vorliegenden Erfindung, eine Sitzanordnung der eingangs genannten Art dahingehend weiterzubilden, dass die Wagenkastenbreite unter Einhaltung der gesetzlichen Vorschriften besser ausgenutzt wird.

Die zuvor hergeleitete und aufgezeigte Aufgabe wird gemäß Anspruch 1 gelöst.

Indem also der bzw. die Passagiersitze so ausgebildet sind, dass deren Projektionsfläche in eine trapezförmige Grundfläche passt, kann die Projektionsfläche gegenüber der herkömmlicher Passagiersitze, die eine im wesentlichen recheckige Form hat, verringert werden. Dadurch nimmt der Passagiersitz im Wagenkasteninnern weniger Raum als ein herkömmlicher Passagiersitz ein. Ordnet man mehrere solcher trapezförmigen Passagiersitze nebeneinander zu einem Doppelsitz oder zu einem Dreifachsitz an, so ist der von der Sitzanordnung eingenommene Raum in Querrichtung, das heißt in der Richtung parallel zur Rückenlehne, deutlich gegenüber dem Fall der Verwendung herkömmlicher Sitze reduziert. Der Sitz ist derart ausgebildet, dass die Basis des Trapezes, also die längere der beiden parallelen Seiten, die Vorderkante der Sitzfläche bildet und die schmalere der beiden parallelen Seiten nach hinten weist, das heißt zur Rückenlehne, was trotz einer gegenüber herkömmlichen Passagiersitzen verkleinerten Sitzfläche dennoch eine angenehme Sitzposition garantiert.

Gemäß einer Ausgestaltung der erfindungsgemäßen Sitzanordnung ist das Trapez ein ungleichschenkliges Trapez. Dabei ist es denkbar, dass die vertikale Projektionsfläche mindestens einer der Armlehnen, vorzugsweise der beiden äußeren Armlehnen der Sitzanordnung, eine Keilform, insbesondere die Form eines gleichschenkligen Trapezes, aufweist. Durch die Keilform bzw. Trapezform der Armlehnen kann bei Doppelsitzen und Dreifachsitzen so viel Raum gewonnen werden, dass bei einer Bestuhlung eines Wagenkastens unter Verwendung der erfindungsgemäßen Sitzanordnung bereits deutlich schmalere Sitzreihen, bezogen auf die Querrichtung, als im Stand der Technik erreicht werden. Dabei kann die vertikale Projektionsfläche der Sitzfläche weiterhin die Form eines Rechteckes oder Quadrates aufweisen.

Bei der Verwendung von Armlehnen mit einer Keilform kann vorgesehen sein, dass die Basis des Trapezes oder Keils, also beim Trapez die längere der beiden parallelen Seiten, beim Keil ebenfalls die entsprechend längere Seite, von einer der beiden kürzeren Seiten der Projektionsfläche gebildet wird und die beiden längeren Seiten aufeinander zulaufen. Mit anderen Worten verjüngt sich die Armlehne in ihrer Verlaufsrichtung. Dabei kann die Basis des Trapezes oder Keils einer der Armlehnen eines der Passagiersitze zur Rückenlehne weisen und die Basis des Trapezes oder Keils einer der Armlehnen eines anderen der Passagiersitze von der Rückenlehne weg weisen. Mit anderen Worten verjüngt sich eine der Armlehnen in Längsrichtung zur Rückenlehne des Passagiersitzes hin, wobei sich die andere Armlehne, beispielsweise des benachbarten Sitzes, zur anderen Seite hin, das heißt von der Rückenlehne weg, verjüngt. Auf diese Weise wird ein besonders großer Raumgewinn erzielt.

Gemäß einer anderen Ausgestaltung der erfindungsgemäßen Sitzanordnung ist das Trapez, welches die Grundfläche des jeweiligen Passagiersitzes bildet, ein gleichschenkliges Trapez. Dabei ist es denkbar, dass die vertikale Projektionsfläche mindestens einer der Sitzflächen, vorzugsweise aller Sitzflächen, der Sitzanordnung die Form eines Trapezes, insbesondere die Form eines gleichschenkligen Trapezes, aufweist. Durch eine Trapezform der Sitzfläche wird ebenfalls ein deutlicher Raumgewinn in Querrichtung erzielt. Dabei müssen die Armlehnen nicht notwendigerweise ebenfalls die Form eines Trapezes aufweisen. Vielmehr ist es denkbar, dass die vertikale Projektionsfläche mindestens einer der Armlehnen, insbesondere der beiden äußeren Armlehnen, vorzugsweise aller Armlehnen, die Form eines Rechtsecks aufweist, was eine besonders komfortable Armauflage bildet.

Bei der Anordnung mehrerer Passagiersitze nebeneinander, beispielsweise bei einem Doppelsitz oder Dreifachsitz, ist es im Fall einer Sitzfläche mit trapezförmiger Projektionsfläche vorteilhaft, wenn mindestens zwei jeweils benachbarte Passagiersitze zueinander horizontal versetzt sind, also einen Längsversatz aufweisen, wodurch in Querrichtung ein besonders großer Raumgewinn erzielt wird. Dabei können im Fall des Längsversatzes die benachbarten Sitze in der gleichen Richtung oder entgegengesetzt zueinander ausgerichtet sein. Eine entgegengesetzte Ausrichtung, bei der also die Rückenlehnen in entgegengesetzte Richtungen weisen, erhöht den Raumgewinn weiter, insbesondere bei Dreifachsitzen, wenn der mittlere Sitz entgegengesetzt zu den beiden äußeren Sitzen der Sitzanordnung ausgerichtet ist.

Für den Fall, dass die benachbarten Sitze in derselben Richtung ausgerichtet sind, wird eine besonders komfortable Armauflage dadurch gebildet, dass die vertikale Projektionsfläche mindestens einer der Armlehnen, insbesondere der mittleren Armlehne(n), die Form eines Vielecks, insbesondere Sechsecks, aufweist. Dieses Vieleck bzw. Sechseck kann beispielsweise gebildet werden, indem zwei Einzelarmlehnen mit jeweils rechteckiger Grundfläche etwas verdreht zueinander zu einer gemeinsamen Armlehne zusammengefasst werden.

Gemäß einer weiteren Ausgestaltung der erfindungsgemäßen Sitzanordnung sind die Passagiersitze als Montageeinheit zusammengefasst. Vorzugsweise werden zwei Passagiersitze zu einem fest montierten Doppelsitz oder drei Passagiersitze zu einem fest montierten Dreifachsitz zusammengefasst. Die einzelnen Baugruppen, die eine solche Sitzanordnung bilden, können in einem Werk vorgefertigt werden und dann auf einfache Weise im Wagenkasten eines Schienenfahrzeugs in Reihen entlang einer Seite oder beider Seiten des Wagenkastens befestigt werden.

Wie bereits angedeutet, können sich jeweils benachbarte Sitze eine Armlehne teilen. Mit anderen Worten ist demnach die Armlehne des einen Sitzes gleichzeitig auch die Armlehne des benachbarten Sitzes. Es ist aber auch denkbar, dass zwischen jeweils benachbarten Sitzen zwei Armlehnen vorgesehen sind, die in ihrer Längsrichtung miteinander fluchtend angeordnet sind. Längsrichtung meint dabei die Verlaufsrichtung der längeren Seiten der Projektionsfläche.

Gemäß noch einer weiteren Ausgestaltung der erfindungsgemäßen Sitzanordnung ist mindestens einer der Passagiersitze gegenüber dem mindestens einen anderen Passagiersitz um 180° horizontal gedreht. Wie gesagt ist dies vorzugsweise bei einer Kombination aus drei Passagiersitzen der mittlere Sitz. Horizontal gedreht meint eine Drehung um die vertikale Achse des jeweiligen Passagiersitzes, wodurch die Rückenlehnen zweier Sitze der Sitzanordnung in entgegengesetzte Richtung weisen. Grundsätzlich ist es aber auch denkbar, zwei jeweils benachbarte Passagiersitze zueinander um einen relativ kleinen Winkel zu verdrehen, vorzugsweise um bis zu 45°, vorzugsweise um bis zu 25°. Auf diese Weise können ebenfalls platzsparende Sitzanordnungen vorgenommen werden. Auch eine Kombination aus einem Längsversatz und einer Verdrehung ist denkbar.

Die Aufgabe wird ferner gemäß einer zweiten Lehre der vorliegenden Erfindung bei einem Schienenfahrzeug der eingangs genannten Art dadurch gelöst, dass mehrere der Sitzanordnungen wie zuvor beschrieben ausgebildet sind. Auf diese Weise ist bei der Bestuhlung eines Wagenkastens eine deutliche Erhöhung der Sitzplatzkapazität gegenüber dem Stand der Technik erreichbar. Insbesondere kann durch den mittels der erfindungsgemäßen Sitzanordnung erzielbaren Raumgewinn von einer 2+1 Bestuhlung zu einer 2+2 Bestuhlung, beispielsweise in der 1. Klasse, oder von einer 2+2 Bestuhlung auf eine 2+3 Bestuhlung, beispielsweise in der 2. Klasse, gewechselt werden, ohne dabei die gesetzlichen Vorschriften zu verletzen. Für den Reisenden ergibt sich der Vorteil von mehr Privatsphäre sowie deutlich mehr Beinfreiheit.

Es gibt nun eine Vielzahl von Möglichkeiten, die erfindungsgemäße Sitzanordnung und das erfindungsgemäße Schienenfahrzeug auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: eine Prinzipskizze eines Passagiersitzes für eine erfindungsgemäße Sitzanordnung,
- Fig. 2a) bis d): verschiedene Ausführungsbeispiele einer erfindungsgemäßen Sitzanordnung (c, d)im Vergleich zu einer herkömmlichen Sitzanordnung (a), Fig. 2b) ist nicht von der Erfindung umfasst,
- Fig. 3a) und b): ein weiteres Ausführungsbeispiel einer erfindungsgemäßen Sitzanordnung (b) im Vergleich zu einer herkömmlichen Sitzanordnung (a),
- Fig. 4: schematisch die Bestuhlung in einem erfindungsgemäßen Schienenfahrzeug und
- Fig. 5a) bis f): verschiedene Ausführungsbeispiele eines erfindungsgemäßen Schienenfahrzeugs, die sich durch die Bestuhlungsvarianten unterscheiden.

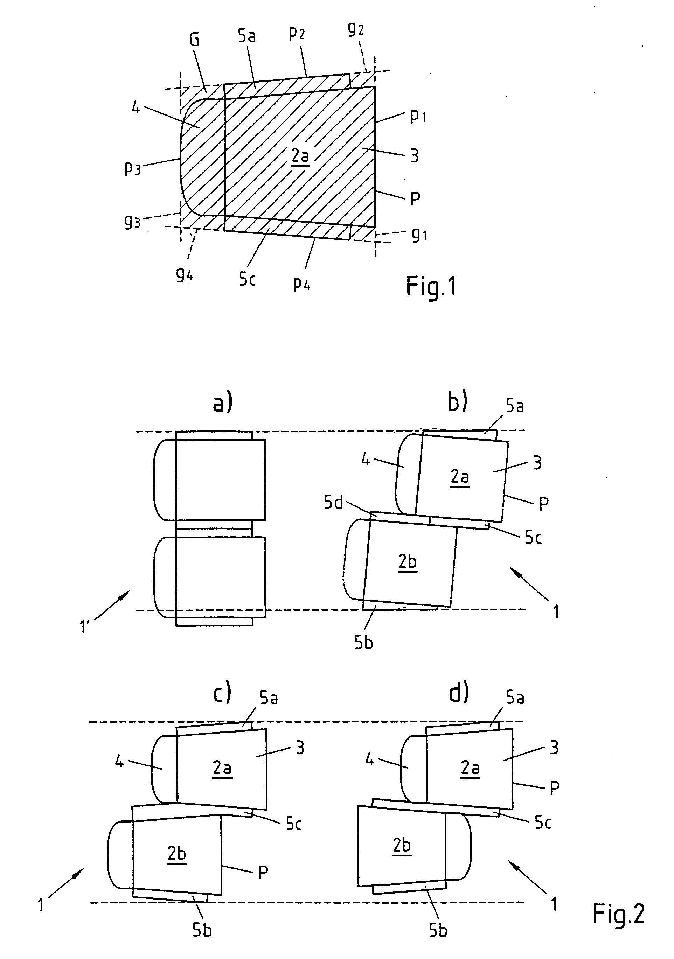

Fig. 1 zeigt einen Passagiersitz 2a, der zusammen mit einem weiteren Passagiersitz eine Sitzanordnung 1 gemäß der vorliegenden Erfindung bilden kann.

Die Grundfläche G, die von den auf den äußeren Begrenzungslinien p₁,p₂,p₃ und p₄ der vertikalen Projektionsfläche P des Passagiersitzes 2a verlaufenden Geraden g₁,g₂,g₃ und g₄ umschlossen wird, hat die Form eines Trapezes. Dabei bildet die vordere Gerade g₁ die Basis des Trapezes. Die Vorderkante der Sitzfläche 3 ist dabei Bestandteil der Basis.

Die Figuren 2c) und 2d) zeigen verschiedene Ausführungsbeispiele von Sitzanordnungen 1 gemäß der vorliegenden Erfindung im Vergleich zu einer Sitzanordnung 1' gemäß Stand der Technik.

In Fig. 2b) weist die Grundfläche G, welche beispielhaft anhand von Fig. 1 erläutert wurde, die Form eines ungleichschenkligen Trapezes auf. Dabei wird die Trapezform des Passagiersitzes 2a) dadurch erreicht, dass dessen linke Armlehne eine vertikale Projektionsfläche in Keilform aufweist. Die Basis des Keils dieser Armlehne weist dabei von der Rückenlehne 4 weg, so dass sich die Armlehne folglich zur Rückenlehne 4 hin verjüngt. Die gegenüberliegende Armlehne 5c weist dabei eine rechteckige Projektionsfläche auf. Auch die Sitzfläche 3 des Passagiersitzes 2a weist eine rechteckige Projektionsfläche auf. Bei dem Passagiersitz 2a ergibt sich dadurch eine trapezförmige Grundfläche, bei der die Basis des Trapezes nach vorne weist, also von der Rückenlehne 4 weg.

Der benachbarte Passagiersitz 2b weist ebenfalls eine Armlehne 5b auf, die eine keilförmige Projektionsfläche hat. Bei dieser Armlehne 5b ist allerdings die Basis des Keils im Vergleich zu der Armlehne 5a an der anderen Seite angeordnet, wodurch sich die Armlehne zur Vorderseite des Sitzes hin verjüngt. Auch bei dem Passagiersitz 2b sind sowohl die Projektionsfläche der Sitzfläche als auch die Projektionsfläche der weiteren Armlehne 5d jeweils rechteckig. Insgesamt ergibt sich damit eine trapezförmige Grundform des Passagiersitzes 2b, bei der die Basis im Gegensatz zum Passagiersitz 2a zur Rückseite des Sitzes weist.

Die beiden Passagiersitze 2a und 2b weisen in Fig. 2b) einen Längsversatz auf, wobei zwischen den Sitzen die beiden Armlehnen 5c und 5d miteinander fluchtend angeordnet sind. Jeder Passagiersitz hat damit eine separate Armlehne.

In Fig. 2c) ist eine Sitzanordnung 1 dargestellt, bei der die Trapezform der jeweiligen Grundfläche dadurch erreicht wird, dass die Sitzflächen 3 beider Passagiersitze 2a und 2b jeweils trapezförmig ausgebildet sind, wobei die Basis der Grundfläche nach vorne weist. Die jeweils äußeren Armlehnen 5a und 5b der Sitzanordnung 1 sind dabei rechteckig ausgebildet. Zwischen den beiden Passagiersitzen 2a und 2b ist in diesem Fall eine gemeinsame Armlehne 5c angeordnet, deren Projektionsfläche die Form eines Sechsecks aufweist, welches dadurch gebildet ist, das zwei Rechtecke zusammengeschoben wurden.

Fig. 2d) zeigt noch ein weiteres Ausführungsbeispiel einer Sitzanordnung 1. Hier sind ebenfalls zwei benachbarte Passagiersitze 2a und 2b mit einer jeweiligen trapezförmigen Sitzfläche 3 vorgesehen. Jedoch ist hier der Passagiersitz 2b gegenüber dem Passagiersitz 2a um 180° horizontal gedreht. Die vertikale Projektionsfläche der Armlehnen 5a, 5b und 5c ist jeweils rechteckig, wobei sich die Passagiersitze 2a und 2b eine gemeinsame Mittelarmlehne 5c teilen.

Vergleicht man die erfindungsgemäβßen Ausführungsbeispiele in den Figuren 2c) und 2d) mit der herkömmlicher rechteckigen Sitzanordnung 1' in Fig. 2a), so ist deutlich erkennbar, dass Sitzanordnungen 1 gemäß der vorliegenden Erfindung eine deutlich geringere Breite aufweisen und somit einen Raumgewinn bei der Bestuhlung in einem Schienenfahrzeug bewirken.

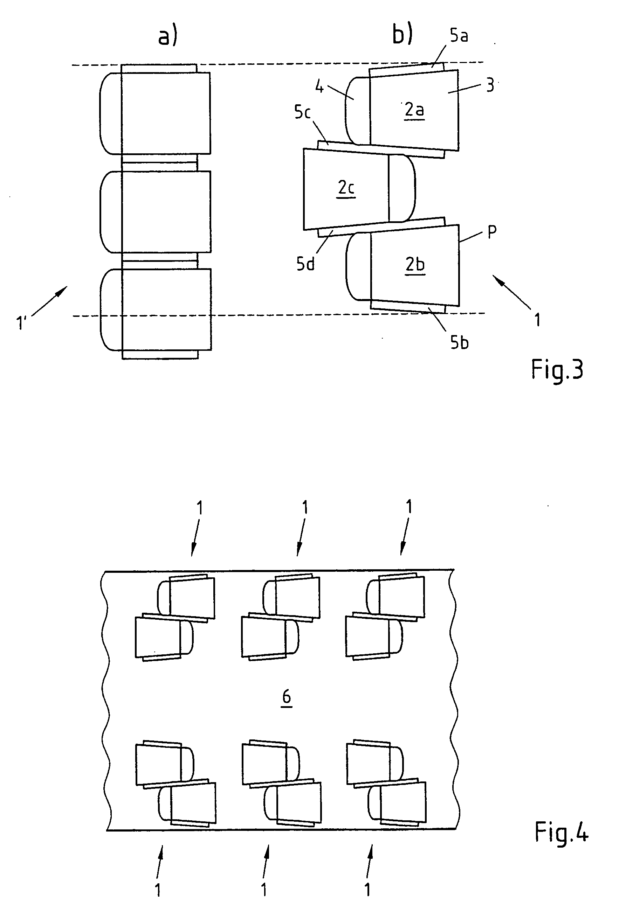

Im Gegensatz zu den in den Figuren 2a) bis d) gezeigten Doppelsitzen ist in den Figuren 3a) und b) eine Sitzanordnung 1 gemäß der vorliegenden Erfindung bzw. 1' gemäß Stand der Technik in Form eines Dreifachsitzes dargestellt.

Dabei zeigt Fig. 3b) ein Ausführungsbeispiel gemäß vorliegender Erfindung, welches dem Prinzip in Fig. 2d) entspricht, wobei hier jedoch noch ein zusätzlicher Sitz vorgesehen ist. In Fig. 3b) ist dabei der mittlere Passagiersitz 2c) gegenüber den beiden äußeren Passagiersitzen 2a) und 2b) um 180° gedreht und versetzt. Sämtliche Armlehnen 5a, 5b, 5c und 5d sind dabei so geformt, dass ihre Projektionsfläche rechteckig ist.

Bei Vergleich der Figuren 3a) (Stand der Technik) und b) (vorliegende Erfindung) ist erkennbar, dass bei einem Dreifachsitz noch ein wesentlich größerer Raumgewinn erzielbar ist.

Fig. 4 zeigt schließlich einen Ausschnitt aus einem Schienenfahrzeug mit einem Wagenkasten 6, der mit mehreren Sitzanordnungen 1 des Typs, wie er in Fig. 2d) dargestellt ist, bestuhlt ist.

Der in Fig. 4 dargestellte Ausschnitt des Wagenkastens 6 zeigt dabei die 1. Klasse des Schienenfahrzeugs. Dabei ist erkennbar, dass durch die erfindungsgemäße Anordnung der Einzelsitze zueinander ein so großer Raumgewinn entsteht, dass trotz einer Innenraumbreite von lediglich 2700 mm auf beiden Seiten jeweils eine Reihe von Doppelsitzen (2+2 Bestuhlung) vorgesehen werden kann.

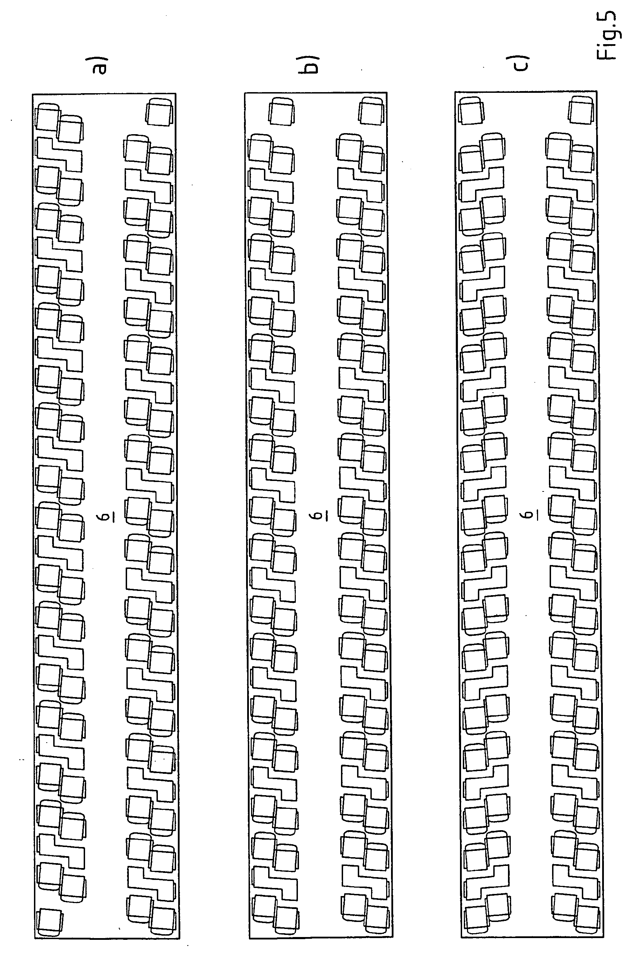

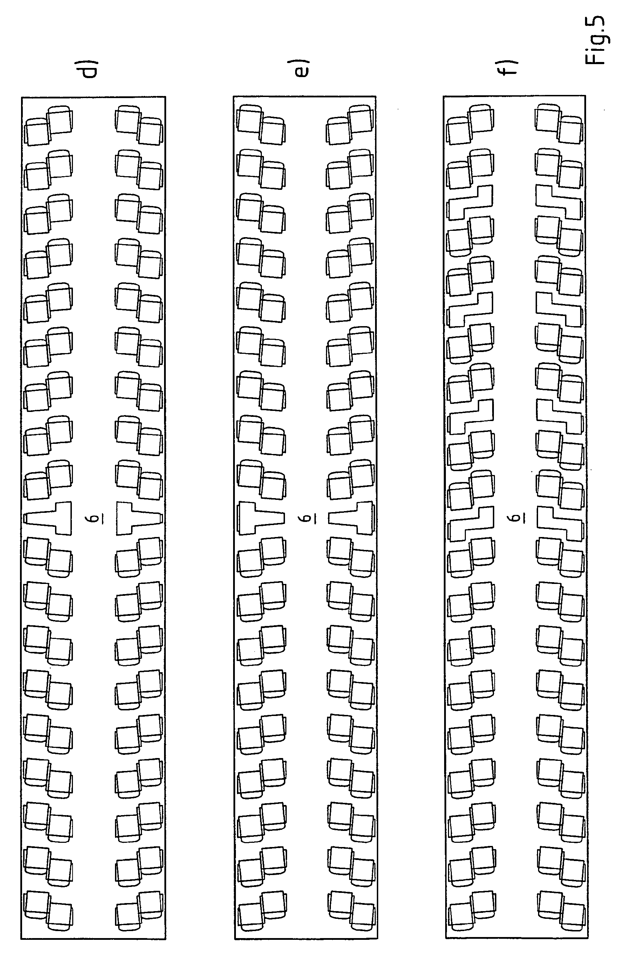

Fig. 5 zeigt schematisch weitere mögliche Varianten von Bestuhlungen in einem Schienenfahrzeug gemäß der vorliegenden Erfindung. Auch hier ist in allen Fällen eine 2+2 Bestuhlung mit Sitzen, deren Projektionsfläche jeweils trapezförmig ausgebildet ist, vorgesehen.

In Fig. 5a ist dabei eine versetzte vis-ä-vis-Anordnung, in Fig. 5b) eine parallele vis-ä-vis-Anordnung und in Fig. 5c) eine gespiegelte vis-ä-vis-Anordnung - jeweils bezogen auf die Mitte des Wagenkastens - dargestellt. Dabei können zwischen einander gegenüberliegenden Sitzanordnungen jeweils entsprechend geformte Tische vorgesehen werden, die z.B. so ausgerichtet sind, dass deren Längsachse parallel zur Längsachse der Sitzanordnungen verläuft, die sich wiederum in einem Winkel im Bereich von 60 - 85° zur Verlaufsrichtung der Wand erstrecken kann.

Fig. 5d) zeigt eine Reihenanordnung, wobei die Sitzanordnungen jeweils zum Gang gedreht sind, wohingegen in Fig. 5e) die Sitzanordnungen zum Fenster bzw. zur Wand gedreht sind.

Fig. 5f) zeigt schließlich eine gemischte Bestuhlung bestehend aus zum Gang gedrehten Reihen (linke Hälfte) und einer gespiegelten vis-ä-vis Anordnung (rechte Hälfte).

## Patentansprüche

1. Sitzanordnung (1) für ein Fahrzeug zur Personenbeförderung, insbesondere ein Schienenfahrzeug, mit mindestens zwei Passagiersitzen (2a,2b,2c), die horizontal nebeneinander angeordnet sind und jeweils eine Sitzfläche (3), eine Rückenlehne (4) und zwei Armlehnen (5a,5b,5c,5d) aufweisen, wobei die Grundfläche (G), die von den auf den äußeren Begrenzungslinien (p₁,p₂,p₃,p₄) der vertikalen Projektionsfläche (P) mindestens eines der Passagiersitze (2a,2b,2c) verlaufenden Geraden (g₁,g₂,g₃,g₄) umschlossen wird, für alle Passagiersitze (2a,2b,2c) die Form eines Trapezes hat, **dadurch gekennzeichnet, dass** bei allen Passagiersitzen (2a,2b,2c) die längere der beiden parallelen Seiten des Trapezes die Vorderkante der Sitzfläche (3) bildet.

2. Sitzanordnung (1) nach Anspruch 1, **dadurch gekennzeichnet, dass** das Trapez ein ungleichschenkliges Trapez ist, wobei insbesondere die vertikale Projektionsfläche mindestens einer der Armlehnen (5a,5b,5c,5d), vorzugsweise der beiden äußeren Armlehnen (5a,5b) der Sitzanordnung (1), eine Keilform, bevorzugt die Form eines Trapezes, besonders bevorzugt eines gleichschenkligen Trapezes, aufweist.

3. Sitzanordnung (1) nach Anspruch 2, **dadurch gekennzeichnet, dass** die vertikale Projektionsfläche der Sitzfläche (3) die Form eines Rechteckes, insbesondere eines Quadrates, aufweist.

4. Sitzanordnung (1) nach Anspruch 2 oder 3, **dadurch gekennzeichnet, dass** die Basis des Trapezes oder Keils von einer der beiden kürzeren Seiten der vertikalen Projektionsfläche der jeweiligen Armlehne (5a,5b,5c,5d) gebildet wird und die beiden längeren Seiten aufeinander zulaufen, wobei insbesondere die Basis des Trapezes oder Keils einer der Armlehnen (5a,5b,5c,5d) eines der Passagiersitze (2a,2b,2c,2d) zur Rückenlehne (4) weist und die Basis des Trapezes oder Keils einer der Armlehnen (5a,5b,5c,5d) eines anderen der Passagiersitze (2a,2b) von der Rückenlehne (4) weg weist.

5. Sitzanordnung (1) nach Anspruch 1, **dadurch gekennzeichnet, dass** das Trapez ein gleichschenkliges Trapez ist, wobei insbesondere die vertikale Projektionsfläche mindestens einer der Sitzflächen (2a,2b,2c), vorzugsweise aller Sitzflächen (2a,2b,2c), der Sitzanordnung (1) die Form eines Trapezes, bevorzugt die Form eines gleichschenkligen Trapezes, aufweist.

6. Sitzanordnung (1) nach Anspruch 5, **dadurch gekennzeichnet, dass** die vertikale Projektionsfläche mindestens einer der Armlehnen (5a,5b,5c,5d), insbesondere der beiden äußeren Armlehnen (5a,5b), vorzugsweise aller Armlehnen (5a,5b,5c,5d), die Form eines Rechteckes aufweist.

7. Sitzanordnung (1) nach Anspruch 5 oder 6, **dadurch gekennzeichnet, dass** die vertikale Projektionsfläche mindestens einer der Armlehnen (5a,5b,5c,5d), insbesondere der mittleren Armlehne(n) (5,5d), die Form eines Vielecks, insbesondere eines Sechsecks, aufweist.

8. Sitzanordnung (1) nach einem der vorangehenden Ansprüche, **dadurch gekennzeichnet, dass** drei Passagiersitze (2a,2b,2c) vorgesehen sind.

9. Sitzanordnung (1) nach einem der vorangehenden Ansprüche, **dadurch gekennzeichnet, dass** die Passagiersitze (2a,2b,2c) als Montageeinheit zusammengefasst sind.

10. Sitzanordnung (1) nach einem der vorangehenden Ansprüche, **dadurch gekennzeichnet, dass** sich jeweils benachbarte Passagiersitze (2a,2b) eine Armlehne (5c,5d) teilen.

11. Sitzanordnung (1) nach einem der Ansprüche 1 bis 12, **dadurch gekennzeichnet, dass** zwischen jeweils benachbarten Passagiersitzen (2a,2b,2c) zwei Armlehnen (5c,5d) vorgesehen sind, die in Längsrichtung miteinander fluchtend angeordnet sind.

12. Sitzanordnung (1) nach einem der vorangehenden Ansprüche, **dadurch gekennzeichnet, dass** mindestens einer der Passagiersitze (2a,2b,2c) gegenüber dem mindestens einen anderen Passagiersitz um 180° gedreht ist.

13. Sitzanordnung (1) nach einem der vorangehenden Ansprüche, **dadurch gekennzeichnet, dass** mindestens zwei jeweils benachbarte Passagiersitze (2a,2b) zueinander horizontal versetzt und/oder verdreht, vorzugsweise um bis zu 45° verdreht, angeordnet sind.

14. Schienenfahrzeug
- mit einem Wagenkasten (6) und
- mit mehreren Sitzanordnungen (1) mit mindestens zwei Passagiersitzen (2a,2b,2c), die horizontal nebeneinander angeordnet sind und jeweils eine Sitzfläche (3), eine Rückenlehne (4) und zwei Armlehnen (5a,5b,5c,5d) aufweisen,
**dadurch gekennzeichnet, dass** mehrere der Sitzanordnungen (1) nach einem der vorangehenden Ansprüche ausgebildet sind.

15. Schienenfahrzeug nach Anspruch 14, **dadurch gekennzeichnet, dass** sich die Längsachse der Sitzanordnungen (1) in einem Winkel im Bereich 60 bis 85° zur Verlaufsrichtung der Wand des Wagenkastens (6) erstreckt, wobei die Sitzanordnungen (1) insbesondere zum Gang oder zur Wand des Wagenkastens (6) gedreht sind.

## Claims

1. A seat arrangement (1) for a vehicle for passenger transport, in particular a rail vehicle, comprising at least two passenger seats (2a, 2b, 2c) disposed next to one another horizontally and each of said seats comprising a seat surface (3), a back rest (4) and two armrests (5a, 5b, 5c, 5d), wherein for all passenger seats (2a, 2b, 2c) the base surface (G) enclosed by the lines (g₁, g₂, g₃, g₄) running along the exterior border lines (p₁, p₂, p₃, p₄) of the vertical projection surface (P) of at least one of the passenger seats (2a, 2b, 2c) has the shape of a trapezoid, **characterised in that** at all passenger seats (2a, 2b, 2c), the longer of the two parallel sides of the trapezoid forms the front edge of the seat surface (3).

2. The seat arrangement (1) according to claim 1, **characterised in that** the trapezoid is a non-isosceles trapezoid, wherein in particular the vertical projection surface of at least one of the armrests (5a, 5b, 5c, 5d), preferably of the two outer armrests (5a, 5b) of the seat arrangement (1), has a wedge shape, preferably the shape of a trapezoid, particularly preferably of an isosceles trapezoid.

3. The seat arrangement (1) according to claim 2, **characterised in that** the vertical projection surface of the seat surface (3) has the shape of a rectangle, in particular of a square.

4. The seat arrangement (1) according to claim 2 or 3, **characterised in that** the base of the trapezoid or wedge is formed by one of the shorter sides of the vertical projection surface of the respective armrest (5a, 5b, 5c, 5d) and the two longer sides run towards one another, wherein in particular the base of the trapezoid or wedge of one of the armrests (5a, 5b, 5c, 5d) of one of the passenger seats (2a, 2b, 2c, 2d) points towards the back rest (4) and the base of the trapezoid or wedge of one of the armrests (5a, 5b, 5c, 5d) of another of the passenger seats (2a, 2b) points away from the back rest (4).

5. The seat arrangement (1) according to claim 1, **characterised in that** the trapezoid is an isosceles trapezoid, wherein in particular the vertical projection surface of at least one of the seat surfaces (2a, 2b, 2c), preferably of all of the seat surfaces (2a, 2b, 2c), of the seat arrangement (1) has the shape of a trapezoid, preferably the shape of an isosceles trapezoid.

6. The seat arrangement (1) according to claim 5, **characterised in that** the vertical projection surface of at least one of the armrests (5a, 5b, 5c, 5d), in particular the two outer armrests (5a, 5b), preferably of all of the armrests (5a, 5b, 5c, 5d), has the shape of a rectangle.

7. The seat arrangement (1) according to claim 5 or 6, **characterised in that** the vertical projection surface of at least one of the armrests (5a, 5b, 5c, 5d), preferably of the middle armrest(s) (5, 5d), has the shape of a polygon, in particular a hexagon.

8. The seat arrangement (1) according to any one of the preceding claims, **characterised in that** three passenger seats (2a, 2b, 2c) are provided.

9. The seat arrangement (1) according to any one of the preceding claims, **characterised in that** the passenger seats (2a, 2b, 2c) are combined as an assembly unit.

10. The seat arrangement (1) according to any one of the preceding claims, **characterised in that** respectively adjacent passenger seats (2a, 2b) share an armrest (5c, 5d).

11. The seat arrangement (1) according to any one of claims 1 to 12, **characterised in that** two armrests (5c, 5d) which are disposed in alignment with one another in the longitudinal direction are provided between respectively adjacent passenger seats (2a, 2b, 2c).

12. The seat arrangement (1) according to any one of the preceding claims, **characterised in that** at least one of the passenger seats (2a, 2b, 2c) is turned through 180° with respect to the at least one other passenger seat.

13. The seat arrangement (1) according to any one of the preceding claims, **characterised in that** at least two respectively adjacent passenger seats (2a, 2b) are disposed horizontally offset and/or twisted, preferably twisted by up to 45°, with respect to one another.

14. A rail vehicle
- comprising a carriage body (6) and
- comprising a plurality of seat arrangements (1) with at least two passenger seats (2a, 2b, 2c) which are disposed horizontally adjacent to one another and which each have a seat surface (3), a back rest (4) and two armrests (5a, 5b, 5c, 5d),
**characterised in that** a plurality of the seat arrangements (1) are configured according to one of the preceding claims.

15. The rail vehicle according to claim 14, **characterised in that** the longitudinal axis of the seat arrangements (1) extends at an angle in the range of 60 to 85° to the running direction of the wall of the carriage body (6), wherein the seat arrangements (1) are turned in particular towards the gangway or towards the wall of the carriage body (6).

## Revendications

1. Agencement de sièges (1) pour véhicule destiné au transport de personnes, en particulier véhicule ferroviaire, comportant au moins deux sièges de passagers (2a, 2b, 2c) qui sont juxtaposés horizontalement et présentent respectivement une surface d'assise (3), un dossier (4) et deux accoudoirs (5a, 5b, 5c, 5d), la surface de base (G) qui est circonscrite par les droites (g₁, g₂, g₃, g₄) s'étendant sur les lignes de limitation extérieures (p₁, p₂, p₃, p₄) de la surface de projection verticale (P) d'au moins un des sièges de passagers (2a, 2b, 2c) ayant pour tous les sièges de passagers (2a, 2b, 2c) la forme d'un trapèze, **caractérisé en ce que**, pour tous les sièges de passagers (2a, 2b, 2c), le plus long des deux côtés parallèles du trapèze formant le bord avant de la surface d'assise (3).

2. Agencement de sièges (1) selon la revendication 1, **caractérisé en ce que** le trapèze est un trapèze à branches inégales, la surface de projection verticale d'au moins un des accoudoirs (5a, 5b, 5c, 5d), de préférence des deux accoudoirs extérieurs (5a, 5b) de l'agencement de sièges (1), présentant en particulier une forme cunéiforme, de préférence la forme d'un trapèze, de manière particulièrement préférentielle une forme de trapèze à branches égales.

3. Agencement de sièges (1) selon la revendication 2, **caractérisé en ce que** la surface de projection verticale de la surface d'assise (3) présente une forme quadrangulaire, de préférence une forme carrée.

4. Agencement de sièges (1) selon la revendication 2 ou 3, **caractérisé en ce que** la base du trapèze ou du cône est formée par un des deux côtés les plus courts de la surface de projection verticale de l'accoudoir respectif (5a, 5b, 5c, 5d) et que les deux côtés plus longs convergent l'un vers l'autre, la base du trapèze ou du cône d'un des deux accoudoirs (5a, 5b, 5c, 5d) d'un des sièges de passagers (2a, 2b, 2c, 2d) étant en particulier tournée vers le dossier (4) et la base du trapèze ou du cône d'un des accoudoirs (5a, 5b, 5c, 5d) d'un autre des sièges de passagers (2a, 2b) étant détournée du dossier (4).

5. Agencement de sièges (1) selon la revendication 1, **caractérisé en ce que** le trapèze est un trapèze à branches égales, la surface de projection verticale d'au moins une des surfaces d'assise (2a, 2b, 2c), de préférence de toutes les surfaces d'assise (2a, 2b, 2c), de l'agencement de sièges (1) présentant en particulier la forme d'un trapèze, de préférence la forme d'un trapèze à branches égales.

6. Agencement de sièges (1) selon la revendication 5, **caractérisé en ce que** la surface de projection verticale d'au moins un des accoudoirs (5a, 5b, 5c, 5d), en particulier des deux accoudoirs extérieurs (5a, 5b), de préférence de tous les accoudoirs (5a, 5b, 5c, 5d), présente une forme quadrangulaire.

7. Agencement de sièges (1) selon la revendication 5 ou 6, **caractérisé en ce que** la surface de projection verticale d'au moins un des accoudoirs (5a, 5b, 5c, 5d), en particulier de l'accoudoir (des accoudoirs) médian(s) (5, 5d), présente une forme polygonale, en particulier hexagonale.

8. Agencement de sièges (1) selon une des revendications précédentes, **caractérisé en ce que** trois sièges de passagers (2a, 2b, 2c) sont prévus.

9. Agencement de sièges (1) selon une des revendications précédentes, **caractérisé en ce que** les sièges de passagers (2a, 2b, 2c) sont regroupés en tant qu'unité de montage.

10. Agencement de sièges (1) selon une des revendications précédentes, **caractérisé en ce que** les sièges de passagers (2a, 2b) respectivement voisins se partagent un accoudoir (5c, 5d).

11. Agencement de sièges (1) selon une des revendications 1 à 12, **caractérisé en ce que**, entre les sièges de passagers (2a, 2b, 2c) respectivement voisins sont prévus deux accoudoirs (5c, 5d) qui sont disposés alignés entre eux dans le sens longitudinal.

12. Agencement de sièges (1) selon une des revendications précédentes, **caractérisé en ce qu'**au moins un des sièges de passagers (2a, 2b, 2c) est tourné de 180° par rapport à l'au moins un autre siège de passager.

13. Agencement de sièges (1) selon une des revendications précédentes, **caractérisé en ce qu'**au moins deux des sièges de passagers (2a, 2b) respectivement voisins sont décalés horizontalement et/ou tournés l'un par rapport à l'autre, de préférence tournés de jusqu'à 45°.

14. Véhicule ferroviaire
- comprenant un caisson de wagon (6) et
- plusieurs agencements de sièges (1) comprenant au moins deux sièges de passagers (2a, 2b, 2c) qui sont juxtaposés horizontalement et présentent respectivement une surface d'assise (3), un dossier (4) et deux accoudoirs (5a, 5b, 5c, 5d),
**caractérisé en ce que** plusieurs des agencements de sièges (1) sont réalisés selon une des revendications précédentes.

15. Véhicule ferroviaire selon la revendication 14, **caractérisé en ce que** l'axe longitudinal des agencements de sièges (1) s'étend suivant un angle compris entre 60 et 85° par rapport au sens d'extension de la paroi du caisson de wagon (6), les agencements de sièges (1) étant tournés en particulier vers le couloir ou vers la paroi du caisson de wagon (6).
